# EUROPEAN PATENT SPECIFICATION

(11) **EP 1 415 312 B1**
(45) Date of publication and mention of the grant of the patent: **25.11.2009**
(21) Application number: 02750768.0
(22) Date of filing: 23.07.2002
(51) Int. Cl.: H01F 27/14

(54) **THE DEVICE FOR REDUCING THE GAS AND WATER CONTAMINATION OF TRANSFORMER OIL FILLING**
VORRICHTUNG ZUR GAS- UND WASSERVERUNREINIGUNGSVERMINDERUNG VON TRANSFORMATORENÖLFÜLLUNG
DISPOSITIF DE REDUCTION DE LA CONTAMINATION DU GAZ ET DE L'EAU DE L'HUILE D'UN TRANSFORMATEUR

(30) Priority: 23.07.2001 CZ 20012669
(43) Date of publication of application: 06.05.2004
(73) Proprietor: Altmann, Josef, 344 01 Domazlice (CZ)
(72) Inventor: Altmann, Josef, 344 01 Domazlice (CZ)
(74) Representative: Langrova, Irena
(86) International application number: PCT/CZ2002/000044
(87) International publication number: WO 2003/011422

(56) References cited:
- DD-A- 147 978
- FR-A- 1 229 973
- US-A- 2 639 308
- US-A- 2 639 309
- PATENT ABSTRACTS OF JAPAN vol. 015, no. 246 (E-1081), 24 June 1991 (1991-06-24) & JP 03 078216 A (DAIHEN CORP), 3 April 1991 (1991-04-03)

## Description

### Field of technique

The invention relates to a device for reducing the gas and water contamination of transformer oil fillings which is suitable especially for reducing air gas and air humidity contamination of power transformers oil fillings.

### Present state of the technology

The existing solutions, reducing the gas and water contamination of fluids, can be distinguished according the principles they utilize on the one hand, or the protection degree which these solutions give to protected fluids on the other hand.

One of the examples well known from engineering practice is the protection of power transformer oil fillings against air gas and humidity infiltration from surrounding atmosphere.

The most frequently utilized devices are limited only to reduce the air humidity infiltration into the transformer oil filling by using air dryers. The dryers, either on absorbtion or freezing principle, are inserted usually into the pipeline joining a dilatation vessel (conservator) with surrounding atmosphere.

Another substantially more effective solution which is able not only to limit the air humidity infiltration, but also air gas infiltration into a protected oil filling, operates on the principle of an elastic element, usually a bag or a diaphragm built directly, in a conservator where by means of said element the protected fluid is separated from surrounding air.

Further solution consists in reducing the air and humidity infiltration into main tank by a so called thermo-hydraulic closure which is built either directly in a conservator or in a pipeline joining the main tank top part with conservator bottom part. In this solution a so called thermal stratifying layer is utilized which arises in a thermo-hydraulic closure vessel and separates cold and potentially contaminated oil from the conservator from hot oil in the main tank. Under suitable conditions this lyer acts as a very thin and perfectly elastic diaphragm protecting the proper transformer oil filling against the infiltration of undesirable admixtures from the environment.

Another relatively new solution, expressively reducing the air gas and humidity infiltration into the oil filling of power transformers, utilizes dissimilar conservator junction with main tank. The junction of the transformer bottom part with the conservator enables that the thermal stratifying layer may be used which arises spontaneously in the transformer bottom part of main tank to separate the hot and clean oil which occurs in a top part of this machine from the air gas contaminated cold oil which occurs in the conservator.

All solutions given here and devices based thereupon have some disadvantages.

Fundamental disadvantage of all devices which merely suppress or reduce the air humidity infiltration into the transformer is the fact that by means of them only the water contamination of the transformer can be affected and thereby the instant (short-term) reliability thereof. These solutions do not limit namely the undesired penetration of gas, oxygen above all, into the transformer and are not able to suppress the oxidation aging both of the proper oil and of solid insulants mainly which affect the long-term reliability of this machine.

However, as main disadvantage of the so called transformer hermetization by means of a bag or a diaphragm, built in a conservator, the fact can be considered that this solution is relatively expensive and needs routinely a tightness check of the elastic element in working conditions. With some leakage appearing, this element cannot be simply repaired and usually the whole conservator must be replaced.

In case the thermo-hydraulic closure is used, some disadvantages of the elastic element do not occur because the thermal stratifying layer arises always spontaneously on a hot and cold oil boundary line and cannot be permanently damaged. But to stabilize this layer, sufficient thermal difference must be maintained in a thermohydraulic closure vessel and - in order to cover the whole extent of transformer working temperatures the thermo-hydraulic closure vessel must be sufficiently voluminous. All these facts complicate both the transformer design (usually so called transport profile thereof must be enlarged), and eventual modification thereof to hermetized version, and further additional devices are necessary which complicate the maintenance, e.g. if the thermal stratifying level must be stabilized by drawing out the oil from the closure.

Main disadvantage of the thermal stratifying layer utilization in the bottom part of a main tank consists in potential stability violation of this layer partly by heat transfer from the machine magnetic circuit anchored at the vessel bottom and partly by turbulent oil stream from the coolers due to relatively high vessel entering velocity thereof the stratifying layer can start to undulate first or even be destroyed afterwards.

### Essence of the invention

The above mentioned disadvantages are restricted substantially by means of the device for reducing the gas and water contamination of fluids consisting of a main tank and a conservator which is provided with a sludge discharge fitting. These are mutually joined by an upper connecting pipe in which a Buchholz relay and a discharge fitting are built. The main tank top part is joined with the oil cooler top part by an upper pipe coupling in which a circulating pump is built. The oil cooler bottom part is joined by a lower pipe coupling with the bottom part of the main tank which is provided with a release fitting, too.

The essence of the invention consists in that the main tank is joined, through the release fitting, by a connection with the top part of the stabilizing tank the bottom part of which is joined by a connecting pipe with a sludge discharge fitting and/or with a fitting located in the conservator bottom part.

In alternative solutions a de-aerating pipe is led out of the main tank top part, behind the Buchholz relay, and inserted into the conservator upper part. The discharge fitting is closed and the release fitting as well as the sludge discharge fitting are open.

A lower Buchholz relay is built in the highest part of the main-tank-stabilizing-tank connection tube and a sludge discharge cock is built in the lowest part of the stabilizing-tank-conservator connecting pipe.

An upper temperature sensor, joined by an upper signal line with a temperature controller, is built in the stabilizing tank upper part, and further a lower temperature sensor, joined by a lower signal line with a temperature controller, is built in a stabilizing tank bottom part.

The advantage of the device according to the invention consists above all in the fact that the clean and hot fluid in a main vessel, heated by a thermal source, is separated by a stable thermal stratifying layer, arisen spontaneously in an external, so called stabilizing tank, from cold and potentially contaminated fluid from the conservator. At the same time, the stratifying layer position and stability are controlled by transformer cooling.

The occurrence of thermal (density) stratifying layers in fluids is known in general and can be often observed partly in the nature, see e.g. the thermal inversion in atmosphere, stratifiing of warm and cold water layers in oceans and dam reservoirs, partly in engineering (e.g. density stratifying in chemical as well as nuclear reactors etc.).

The influence of these layers is mostly held as negative phenomenon because these layers are very stable and obstruct the requested fluid mixing very effectively. On the contrary, in the device according to the invention this phenomenon and its relatively high stability are utilized to reduce the undesirable admixture infiltrations into the protected fluid.

### Survey of figures on the drawings

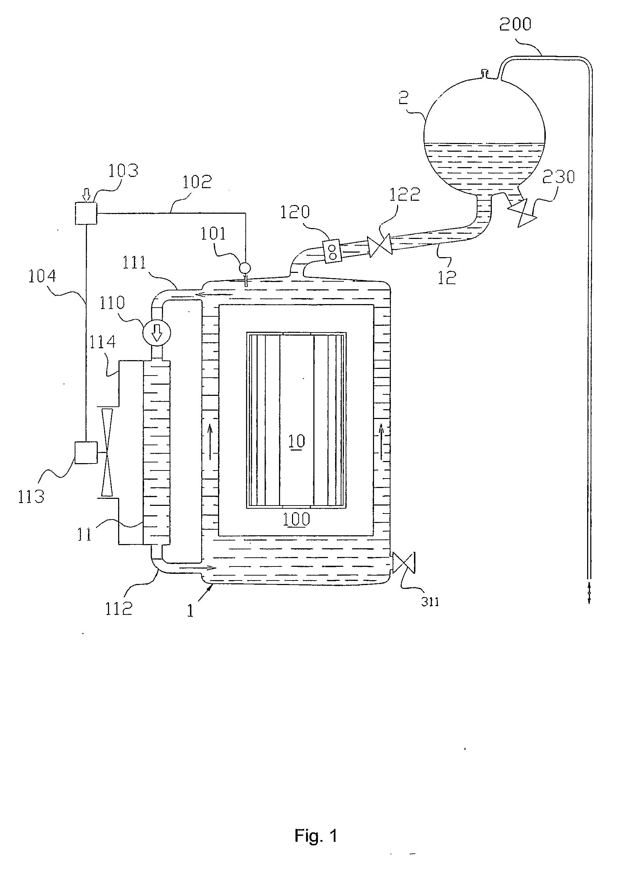

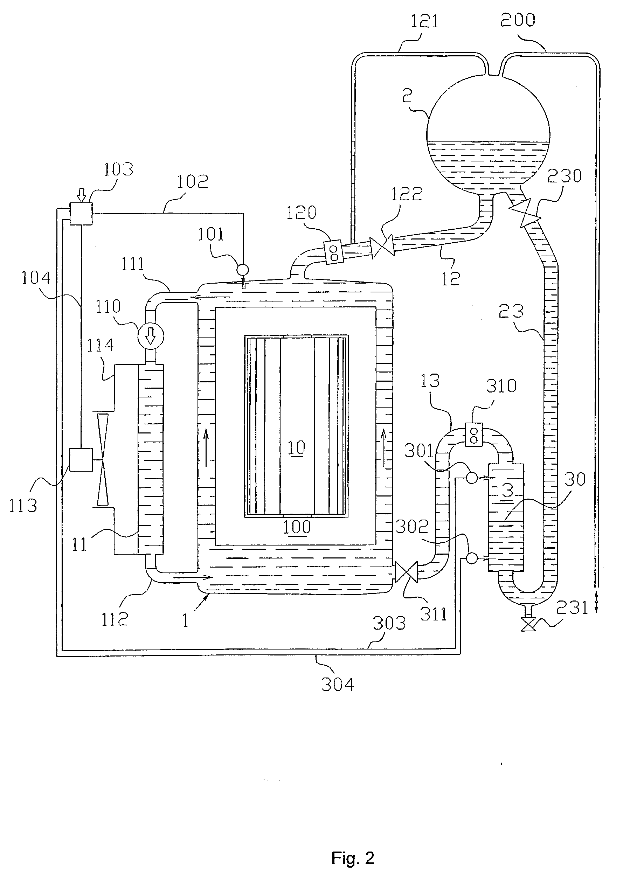

The invention is explained by means of Fig. 1 on which the original solution is demonstrated. On the Fig. 2 the device in accordance with the proposed solution is presented.

### Example on the invention embodiment

One of practical embodiments according to the invention is given on the attached drawing in the Fig. 2 where the device in accordance with the invention is presented as usual power transformer modification the standard arrangement of which is given on the Fig 1.

Conformably to the Fig. 2 an example on the device arrangement in accordance with the invention consists above all of a main tank 1, of a conservator 2 located above the main tank 1 and the stabilizing tank 3 , where partly the lower part of the conservator 2 is joined with a lower part of said stabilizing tank 3 by means of a lower connecting pipe 23, an upper part of said stabilizing tank 3 being joined by a connection 13 with a lower part of the transformer 1, partly the lower part of the conservator 2 is joined with the upper part of the main tank 1 by an upper connection pipe 12 and partly the upper part of the conservator 2 is also joined with the connection pipe 12 by a de-aerating pipe 121 and with surrounding atmosphere by equalizing pipe 200.

A magnetic circuit 100 provided with a winding 10 is built in the main tank 1, whereby from the left upper side of the main tank 1 an upper pipe coupling 111, with built in circulating pump 110, is led out and inserted into the upper part of an oil cooler 11 to which a fan box 114, with a built in fan 113, is firmly attached and simultaneously a lower pipe coupling 112, led into a lower part of the oil cooler 11, is led out from the left lower part of the main tank 1.

A lower connecting pipe 23 is led out from a discharge fitting 230 of the conservator 2 and is provided with a sludge discharge fitting 231 in its lowest part. The stabilizing tank 3 is provided with a lower temperature sensor 302 in its bottom third and with upper temperature sensor 301 in its top third. Then, in the highest part of a connection 13 the lower Buchholz relay 310 is built firmly and a lower part of the connection 13 is inserted into a release fitting 311 located in a lower part of the main tank 3.

In an upper connecting pipe 12 an upper Buchholz relay 120 and a discharge fitting 122 are built in a standard way and simultaneously, from this pipeline behind the Buchholz relay 120, the de-aerating pipe 121 is led which is disembogued into the upper part of the conservator 2.

A control circuit, used to control the transformer oil temperature in a standard way, consisting of a temperature sensor 101, built in a cover of the main tank 1 and joined by a signal line 102 with an input of a temperature controller.103 the output of which is joined by a control line 114 with a fan 113, is extended in this case by two temperature values measured on the stabilizing tank 3, i.e. by means of the upper temperature sensor 301, joined by an upper signal line 303, with the temperature controller 103, and by means of a lower temperature sensor 302 which is joined by a lower signal line 304 with the temperature controller.

The operation of the device in compliance with the invention can be best described by comparing the processes going on in oil filling in a transformer, arranged in a standard way according to the Fig. 1, and in a transformer arranged according to the Fig. 2. By comparison of both Figures it becomes obvious that the modification of a standard transformer arrangement, according with the invention, has small extent relatively and consists in suitable joining the conservator bottom part with the machine vessel bottom part by means of a lower connecting pipe in which a stabilisation tank is built on the one hand, and in joining the upper connecting pipe to the conservator top part by a de-aerating pipeline on the other hand.

In both cases, in standard operation the main tank 1 oil filling is heated by loss power of the magnetic circuit 100 and of the winding 10 and the heated oil is sucked by the upper pipe coupling 111 into a circulating pump 110 and driven into the oil cooler 11 where the oil is forced-cooled by air delivered by the fan 113 and after cooling the oil is led by the lower pipe coupling 112 back into the main tank 1, whereat the oil bypasses and cools the magnetic circuit 100 and the winding 10 again and is led into the oil cooler 11 once more.

Under these conditions, in the standard transformer arrangement in Fig. 1 the main tank 1 and the conservator 2 are joined by the upper connecting pipe 12 which is led from the highest point of the main tank 1 and enters the lowest part of the conservator 2. In this case the discharge fitting 122 of the upper connecting pipe 12 is open, and of course the standard sludge discharge fitting 230 of the conservator and the standard release fitting 311 of the main tank are closed, too.

During operation the oil is heated steadily in the main tank 1 by the loss power of both the magnetic circuit 100 and the winding 10 and, at the same time, the oil in the conservator 2 is cooled by atmospheric environment and therefore between the main tank 1 and the conservator 2 the thermal difference arises due to which hot oil flows steadily, even under constant temperature, through the top cross section half of the upper connecting pipe 12 from the main tank 1 into the conservator 2 where said oil is also saturated by atmospheric gas and humidity possibly and the same cooled oil volume is led simultaneously from the conservator 2 (under steady conditions) through the bottom cross section half of the upper connection pipe 12 back into the main tank 1 due to which the oil filling of this machine is contaminated.

This quasistationary contamination is intensified further by dynamic contamination which is caused by transformer temperature change in time regardless whether these changes are due to machine load changing or control deviation of transformer cooling in this case. Due to temperature increase by oil dilatation in the machine vessel, a part of hot oil is always driven out of the main tank into the conservator (where it is saturated with air gas and humidity again) and, with transformer oil filling temperature drop, the corresponding oil volume, contaminated in this way, is delivered back into the main tank.

The purpose of the device in compliance with the invention is to suppress as quasistationary as dynamic transport of contaminating substances from the environment into the protected fluid in the main tank.

As it is obvious by comparing the Figs 1 and 2, this purpose is reached in the device according to the invention above all due to that in the transformer, modified and parametrically set in accordance with the invention, the influence of both thermosiphon phenomenon and dynamic rinsing process between the main tank 1 and the conservator 2 is suppressed extensively.

The thermosiphon phenomenon is suppressed simply by closing the discharge fitting 122 in the upper connecting pipe 12 where free oil flow, necessary for the transformer oil filling dilatation, is enabled by opening a spare pipeline which is formed by simultaneously opening of the sludge discharge fitting 230 of the conservator 2, to which the lower connecting pipe 23 is attached, and of the release fitting 311 on the bottom part of the main tank 1. Of course, this spare pipeline composed of the lower connection part 23 and the connection 13, is filled first with oil from the conservator 2 and vented by means of the lower Buchholz relay 310, with the oil content of the conservator 2 being filled up properly by oil.

Possible gas escaping from the main tank 1 is not affected by the device in compliance with the invention, because the gas, after having passed through the upper Buchholz relay 120, can flow freely through the de aerating pipe 121 into the top part of the conservator 2 and escape freely into the surroundings through the equalizing pipe 200.

At the same time, the dynamic transport of contaminating substances from the conservator 2 into the main tank 1 is expressively limited by influence of the stabilizing tank 3 in which thermal stratifying layer 30 arising and persisting is secured effectively in a controlled way due to which hot oil, entering the stabilizing tank 3 through the connection 13 downwards from the main tank 1, is separated from cold contaminated oil, entering the stabilizing tank 3 upwards from the conservator 2 through the lower connecting part 23.

At the same time the thermal stratifying layer 30 stability and position are conditioned by transformer thermal conditions which are controlled by means of the temperature controller 103 both in a normally arranged transformer, as presented on the Fig. 1, and in the transformer arranged in accordance with the invention, see the Fig. 2. With oil temperature rising in the top part of the main tank 1, this deviation is processed by the temperature sensor 101 to electric signal which is led by a signal line 102 to the temperature controller 103 where it is compared with the requested temperature value T of the transformer. With the temperature of this machine being greater than the requested one, the fan 113 is switched on by a control line 104 and starts to drive environmental air into the fan box 114.

Due to forced air by-passing, the thermal energy transfer from a heat-changing surface of the oil cooler 11 into the air environment is intensified and oil, passing through the cooler, is cooled and this process continues till the oil temperature drops by previously chosen temperature difference ΔT, the so called control process hysteresis, under the requested machine temperature T.

Then the temperature controller 103 switches off the fan 113 and the machine temperature increases again and the whole process is repeated.

With the transformer modified according to the invention, this cyclic process is used advantageously to stabilize the thermal stratifying layer 30 in the stabilizing tank 3.

With the transformer temperature rising and the oil volume in the main tank 1 increasing adequately, a part of hot oil is driven through the connection 13 into the top part of the stabilizing tank 3, the thermal stratifying layer 30 shifts downwards in this vessel, and cold oil from the bottom part of the stabilizing tank 3 is driven through the lower connecting pipe 23 into the conservator 2.

In the moment the thermal stratifying layer 30 shifts under the position of the lower temperature sensor 302, the signal, caused by the step temperature increase, is transmitted by the lower signal line 304 to the temperature controller 103 and produces the first modification of the hysteresis value ΔT in this controller and the temperature controller 103 switches on the fan 113. The transformer temperature starts to decrease, the oil volume in the main tank 1 drops and the corresponding cold oil volume flows from the conservator 2 into the bottom part of the stabilizing tank 3 through the lower connecting pipe 23.

The thermal stratifying layer 30 moves upwards and in the moment it passes the level of the upper temperature sensor 301 the signal, caused by step drop of the measured temperature, is transferred by the upper signal line 303 to the temperature controller 103 and produces the second modification of the hysteresis zit in this controller and a correction of the requested transformer temperature T. After these modifications of both parameters of the temperature controller 103 having been set automatically, it is warranted that the thermal stratifying layer 30 must move inside the stabilizing tank 3 only under normal operating conditions, i.e. the so called hot oil penetration into the conservator 2 is eliminated equally as cold oil penetration into the main tank 1.

To separate efficiently the hot and cold oil by means of the thermal stratifying layer 30 in the stabilizing tank 3, the inevitable thermal difference must be held by which the thermal stratifying layer 30 stability is conditioned.

In the device in compliance with the invention this purpose is reached in two ways, i.e. by physical arrangement of the connection 13 and by dimensioning the stabilizing tank 3 and, simultaneously in a parametric way, by adaptive control of requested transformer temperature T and by its cyclic and accurately defined change.

Fundamental advantage of the device according to the invention consists in its simplicity which enables easy and non-expensive modification even of existing transformers due to which following radical atmospheric gas and humidity contamination reduction of oil fillings thereof augments their instantaneous and long-term reliability of said transformers.

Further advantage of the device in accordance with the invention is rooted in the fact that it makes use of power sources and equipments which are always available in a power transformer with forced cooling and oil circulation. Magnetic circuit and winding loss power is utilized here as a thermal source necessary to create a thermal stratifying layer in the stabilizing tank and simultaneously the existing forced fan transformer cooling is used to stabilize the position of the thermal stratifying layer in the stabilizing tank even at considerable temperature changes e.g. due to transformer loading change.

Further advantage of the device in compliance with the invention consists above all in that it does not content any mechanically movable parts which could be damaged otherwise in normal operation and should be tested or repaired.

Another advantage is rooted also in that by the device according to the invention the operation of the normal transformer protection, i.e. the Buchholz relay, is not affected but the reliability, sensitivity and selectivity of this protection is augmented expressively by doubling this relay.

Further advantage of this device is that it suppresses arising of free water and other undesirable admixtures maximally which originate in the conservator or in the transformer itself respectively and that it enables to separate and drain off this water and the sudge from the lowest part of the connecting pipeline even during the normal transformer operation.

### List of reference numbers

- 1: main tank
- 10: winding
- 11: oil cooler
- 12: upper connecting pipe
- 13: connection
- 100: magnetic circuit
- 101: temperature sensor
- 102: signal line
- 103: temperature controller
- 104: control line
- 110: circulating pump
- 111: upper pipe coupling
- 112: lower pipe coupling
- 113: fan
- 114: fan box
- 120: upper Buchholz relay
- 121: de-aerating pipe
- 122: discharge fitting

- 2: conservator
- 23: lower connecting pipe
- 230: sludge discharge fitting
- 231: sludge discharge cock
- 200: equalizing pipe

- 3: stabilizing tank
- 30: thermal stratifying layer
- 303: upper signal line
- 304: lower signal line
- 310: lower Buchholz relay
- 301: upper temperature sensor
- 302: lower temperature sensor
- 311: release fitting

## Claims

1. The device for reducing the gas and water contamination of fluids consisting of a main tank (1) and a conservator (2) provided with a sludge discharge fitting (230), said main tank and conservator being joined mutually by an upper connecting pipe (12) in which an upper Buchholz relay (120) and a discharge fitting (122) are built whereby a top part of said main tank (1) is joined with a top part of an oil cooler (11) by an upper pipe coupling (111) in which a circulating pump (110) is built and a bottom part of said oil cooler (11) is joined with the bottom part of said main tank (1), provided also with a release fitting (311) by a lower pipe coupling (112), **characterized in that**, said main tank (1) is joined in its bottom part by a connection (13), led out of said release fitting (311), with a top part of a stabilizing tank (3) the bottom part of which being joined by a connecting pipe (23) with said sludge discharge fitting (230) and/or with a fitting located in the bottom part of said conservator (2).

2. The device according to the Claims 1. and 2., **characterized in that**, a de-aerating pipe (121), inserted into the top part of said conservator (2), is led out from the top part of said main tank (1) behind said Buchholz relay (120), whereby said discharge fitting (122), built in said upper connecting pipe (12) in a direction towards said conservator (2), is closed, and said release fitting (311), in the bottom part of said main tank (1), and said sludge discharge fitting (230), in the bottom part of said conservator (2), are open.

3. The device according to the Claims 1. to 3., **characterized in that**, the lower Buchholz relay (310) is built in the highest part of said connection (13) and a sludge discharge cock (231) is built in the lowest part of said connecting pipe (23).

4. The device according to the Claims 1. to 4., **characterized in that**, an upper temperature sensor (301), connected with an upper signal line (303) and to a temperature controller (103), is built in the top part of said stabilizing tank (3) and further a lower temperature sensor (302), connected by a lower signal line (304) with said temperature controller (103), is built in the bottom part of said stabilizing tank (3) whereby the operation of the temperature controller (103) is modified so that the position of a thermal stratifying layer (30) in said stabilizing tank (3) may be stabilized by switching on and off a fan (113) in the basis of signals of said upper temperature sensor (301) and said lower temperature sensor (302).

## Patentansprüche

1. Die Anlage zur Herabsetzung der Gas- und Wasserverschmutzung der Flüssigkeiten, bestehend aus einem Hauptkessel (1) und einem Ausgleichsgefäß (2), versehen mit einer Entschlammarmatur (230), wobei der erwähnte Hauptkessel und ein Ausgleichsgefäß gegenseitig mittels einer oberen Verbindungsrohrleitung (12) verbunden sind, in welcher ein oberes Buchholz-Relais (120) und eine Entladungsarmatur (122) eingebaut sind, wobei der Oberteil des erwähnten Hauptkessels (1) mit dem Oberteil des Ölkühlers (11) mittels eines Oberverbindungstücks (111) verbunden ist, in welchem eine Umlaufpumpe (110) eingebaut ist, und der Unterteil des besagten Ölkühlers (11) mit dem Unterteil des erwähnten Hauptkessels (1), der auch mit einer Entlassungsarmatur (311) ausgestattet ist, mittels eines Unterverbindungsstücks (112) verbunden ist, **gekennzeichnet dadurch, dass** der genannte Hauptkessel (1) in seinem Unterteil, mittels des aus der Entladungsarmatur (311) ausgeführten Verbindungsstücks (13), mit dem Oberteil des Stabilisierungsgefäßes (3) verbunden ist, dessen Unterteil mittels der Verbindungsrohrleitung (23) mit der genannten Entschlammarmatur (230) und/oder mit einer im Unterteil des erwähnten Ausgleichgefäßes (2) untergebrachter Armatur verbunden ist.

2. Die Anlage nach den Ansprüchen 1. und 2., **gekennzeichnet dadurch, dass** das in das Oberteil des genannten Ausgleichgefäßes (2) eingelegte Entlüftungsrohr (121) aus dem Oberteil des erwähnten Hauptkessels (1) hinter dem genannten Buchholz-Relais (120) ausgeführt ist, wobei die genannte Abtrennarmatur (122), eingebaute in der oberen Verbindungsrohrleitung (12) in der Richtung gegen das Ausgleichgefäß (2), geschlossen ist und die erwähnte Entladungsarmatur (311), im Unterteil des besagten Hauptkessels (1), und die erwähnte Ablaßarmatur (230), im Unterteil des erwähnten Konservators (2), geöffnet sind.

3. Die Anlage nach den Ansprüchen 1. bis 3., **gekennzeichnet dadurch, dass** das untere Buchholz-Relais (310) im höchsten Teil des genannten Verbindungsstücks (13) eingebaut ist und der Entschlammhahn (231) im untersten Teil der genannten Verbindungsrohrleitung (23) eingebaut ist.

4. Die Anlage nach den Ansprüchen 1. bis 4., **gekennzeichnet dadurch, dass** ein mit der oberer Signalleitung (303) verbundener und zum Temperaturregler (103) angekoppelter oberer Temperaturfühler (301) in oberem Teil des genannten Stabilisierungsgefäßes (3) eingebaut ist und weiter ein mit der unteren Signalleitung (304) verbundener und zum Temperaturregler (103) angekoppelter oberer Temperaturfühler (302) in unterem Teil des genannten Stabilisierungsgefäßes (3) eingebaut ist, wobei die Funktion des Temperaturreglers (103) so aufbereitet ist, dass die Lage der Wärmeschichtung (30) im genannten Stabilisierungsgefäß (3) durch Ein- und Ausschaltung des Lüfters (113) auf Grund der Signale des erwähnten oberen Temperaturfühlers (301) und des unteren Temperaturfiihlers (302) stabilisiert wird.

## Revendications

1. Dispositif de reduction de la contamination du gaz et de l'eau de l'huile d'un transformateur comprenant un réservoir principal de transformateur (1) et un réservoir de dilatation (2) pourvu d'une installation d'écoulement de la lie (230), les réservoirs étant raccordés l'un à l'autre par un tuyau supérieur de raccordement (12) dans lequel un relais Buchholz supérieur (120) et une installation d'écoulement (122) sont encastrés, la partie supérieure du réservoir principal du transformateur (1) est raccordée à la partie supérieure d'un refroidisseur d'huile (11) par un tuyau de raccordement supérieur (111) dans lequel une pompe de circulation (110) est encastrée, et la partie inférieure du dit refroidisseur d'huile (11) est raccordée à la partie inférieure de la dite cuve principal (1) pourvue d'une installation d'écoulement (311), par un tuyau de raccordement inférieur (112), **caractérisé par le fait que** le réservoir principal du transformateur (1) est raccordé par un tuyau de raccordement (13) dans sa partie inférieure, débouchant de la dite installation d'écoulement (311) à la partie supérieure d'un réservoir stabilisateur (3) dont la partie inférieure est raccordée à l'installation d'écoulement de la lie (230) et/ ou l'installation située dans la partie inférieure du réservoir de dilatation (2) par un tuyau de raccordement (23).

2. Dispositif selon les revendications 1 et 2, **caractérisé par le fait qu'**un tuyau de desaération (121) inséré dans la partie supérieure du réservoir de dilatation (2) est conduit de la partie supérieure du réservoir principal du transformateur (1) derrière le relais Buchholz supérieur (120), l'installation d'écoulement (122) encastrée dans le tuyau supérieur de raccordement (12) vers le réservoir de dilatation (2) est fermée et l'installation d'écoulement (311) dans la partie inférieure du réservoir principal du transformateur (1) et l'installation d'écoulement de la lie (230) dans la partie inférieure du réservoir (2) de dilatation sont ouvertes.

3. Dispositif selon les revendications 1, 2 et 3, **caractérisé par le fait que** le relais Buchholz (310) est encastré dans la partie la plus haute du tuyau de raccordement (13) et un robinet de purge (231) est encadré dans la partie la plus basse du tuyau de raccordement (23).

4. Dispositif selon les revendications 1, 2, 3 et 4 est **caractérisé par le fait qu'**un capteur supérieur (301) de la température relié avec un régulateur de température (103) par une ligne supérieure de signalisation (303), est encadré dans la partie supérieure du réservoir stabilisateur (3), et ensuite un capteur inférieur (302) de la température relié avec un régulateur de température (103) par une ligne inférieure de signal (304) est encadré dans la partie inférieure du réservoir stabilisateur (3), le fonctionnement du régulateur de température (103) est adapté de sorte que la position d'une couche de stratification de température (30) dans le réservoir stabilisateur (3) en vertu des signaux du capteur supérieur (301) de la température et des signaux du capteur inférieur (302) de la température soit stabilisée moyennant la mise en marche et l'arrêt d'un ventilateur (113).
